# EUROPEAN PATENT APPLICATION

(11) **EP 2 608 478 A1**
(43) Date of publication of application: **26.06.2013**
(21) Application number: 11306715.1
(22) Date of filing: 21.12.2011
(51) Int. Cl.: H04L 29/06

(54) **Method of protection of a device against denial of service attacks**

(71) Applicant: Gemalto SA, 92190 Meudon (FR)
(72) Inventor: Gouget, Aline, 92190 Meudon (FR); Proust, Philippe, 92190 Meudon (FR)

(57) **Abstract**

The present invention relates to a method of protecting a device against attacks, said device comprising a ratification counter initialized with an integer value N, wherein during an authentication step of a device user at a requested processing:
- when the current value N of the ratification counter is equal to a predefined maximum value P of a number of wrong first authorization data entered by the device user through a first communication protocols, then
- a second communication protocol is triggered through which a second authorization data is entered by the device user, said second communication protocol being different from said first communication protocol.

The method according to the present invention allows reducing the risks of malicious attacks. At least, the attacks are more complex to carry out for a malicious attacker.

## Description

### FIELD OF THE INVENTION

The present invention relates to a method of protection of a personal device implementing at least two communication protocols against denial of service attacks. The invention also pertains to a device using said method.

### BACKGROUND OF THE INVENTION

Generally, the secret code verification interface of a device is accessible to an attacker, the attacker can trigger the execution of the operation of verification of the secret code and thus have various values tested until a positive response is obtained indicating that the secret code presented is valid.

To prevent an excessively large number of values being tested, the device generally has a ratification counter which blocks its operation at the end of a given number of incorrect codes. In practice, this number is generally 3. This means that, after three incorrect inputs, the device is locked. In the case of a Smart card, the user would be requested to enter a longer code like a PUK code.

Today, devices, like smart card, are security protected against brute force attacks by the ratification counter. The counter decreases by one each time you enter the wrong PIN code. When you enter the correct PIN, the ratification counter resets to its initial value.

The protection of such devices against hacking attempts is a recurring problem. One of the recurring problem is an attacker who successively presents two code values (or more generally n-1 if the number of incorrect codes causing blockage of the card is n), and if the code is wrong twice, that means that the response to the verification of the secret code is negative, the ratification counter will be incremented by two, then the attacker stops the tests and wait until this counter is reinitialized by an entry of the correct code by the user. If the user has not made a mistake, the ratification counter which was at 2 because of the attempts of the attacker is reset to zero. Thus the attacker can recommence tests. For instance, in the case of a contact and contactless combi card, we can assume that a malicious attacker is using the contactless interface of the card, without the knowledge of the legitimate card user, with the aim of blocking the associated ratification counter. In contrast, we can also assume that an attacker will use the contact interface by temporarily stealing the card of a legitimate user.

Therefore, such mechanisms allow the development of denial-of-service attacks.

Further alternative and advantageous solutions would, accordingly, be desirable in the art.

### SUMMARY OF THE INVENTION

The present invention aims at avoiding, or at least making more difficult the above-mentioned malicious attacks.

The present invention concerns devices able to implement at least two communication protocols which can belong to the following groups of protocols: IS07816, USB, SWP, NFC, Bluetooth, Zigbee, 2G, 3G or Wi-Fi protocols. Such devices can be for instance a contact and contactless combi card, a mobile phone or a mobile device.

The present invention is defined, in its broadest sense, as a method of protecting a device against attacks, said device comprising a ratification counter initialized with an integer value N, wherein during an authentication step of a device user at a requested processing:
- when the current value N of the ratification counter is equal to a predefined maximum value P of a number of wrong first authorization data entered by the device user through a first communication protocols, then
- a second communication protocol is triggered through which a second authorization data is entered by the device user, said second communication protocol being different of said first communication protocol.

Therefore, the method according to the present invention allows reducing the risks of malicious attacks. At least, the attacks are more complex to carry out for a malicious attacker.

The present invention also relates to a device comprising means to execute the method of protecting said device against denial of service attacks.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 represents a device of the type to which the present invention is applied as an embodiment;
- Figure 2 shows a flowchart of a particular form of an embodiment ;
- Figure 3 shows a flowchart of a particular form of an embodiment ; and
- Figure 4 shows a flowchart of a particular form of an embodiment.

### DETAILED DESCRIPTION OF EMBODIMENTS OF

### THE INVENTION

The same elements have been designated with the same reference numerals in the different drawings. For clarity, only those elements and steps which are useful to the understanding of the present invention have been shown in the drawings and will be described. In particular, the resources used by an electronic circuit comprising a ratification counter have not been detailed, the present invention being compatible with any current use of a hardware or software resource. Further, the mechanisms of data communication between the electronic circuit and its environment have not been detailed either, the present invention being here again compatible with usual mechanisms.

Moreover, when an action is said to be performed by a device, it is in fact executed by a microprocessor in this device controlled by instruction codes recorded in a program memory on the said device. An action is also ascribed to an application. This means that part of the instruction codes making up the application are executed by the microprocessor.

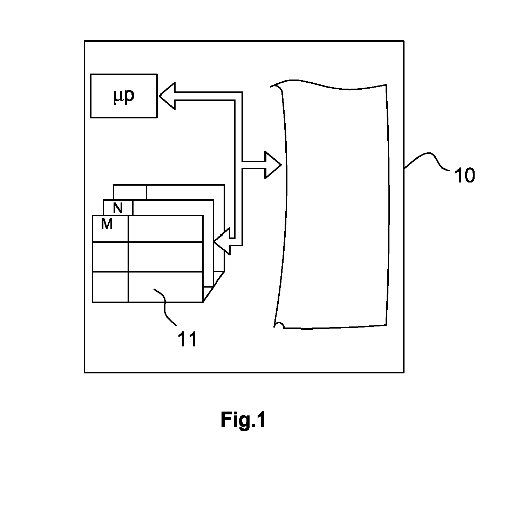

FIG. 1 schematically shows a device 10 of the type to which the present invention is applied as an embodiment. The device 10 comprises at least one ratification counter 11. Said device 10 can for instance be a contact and contactless combi card, a mobile phone, a smart card, a portable token like Universal Serial Bus dongle and so on. In general, the device 10 can be any device comprising at least one ratification counter. The device 10 is capable of getting linked up with a user to exchange data by a first protocol communication 12 and a second protocol communication 13.

The first and the second protocols communication can for instance belong to the following group of communication protocols: IS07816, USB, SWP, NFC, Bluetooth, Zigbee, 2G, 3G or Wi-Fi protocols. This list is only for exemplifying existing protocols communication and is not considered to reduce the scope of the present invention.

The first and the second communication protocols are two systems for exchanging messages different and independents from the other.

For instance, in the case of a contact and contactless combi card, said first communication protocol 12 can be a contact mode, and said second communication protocol 13 can be a contactless mode, or, in an alternative embodiment, said first communication protocol 12 can be a contactless mode, and said second communication protocol 13 can be a contact mode.

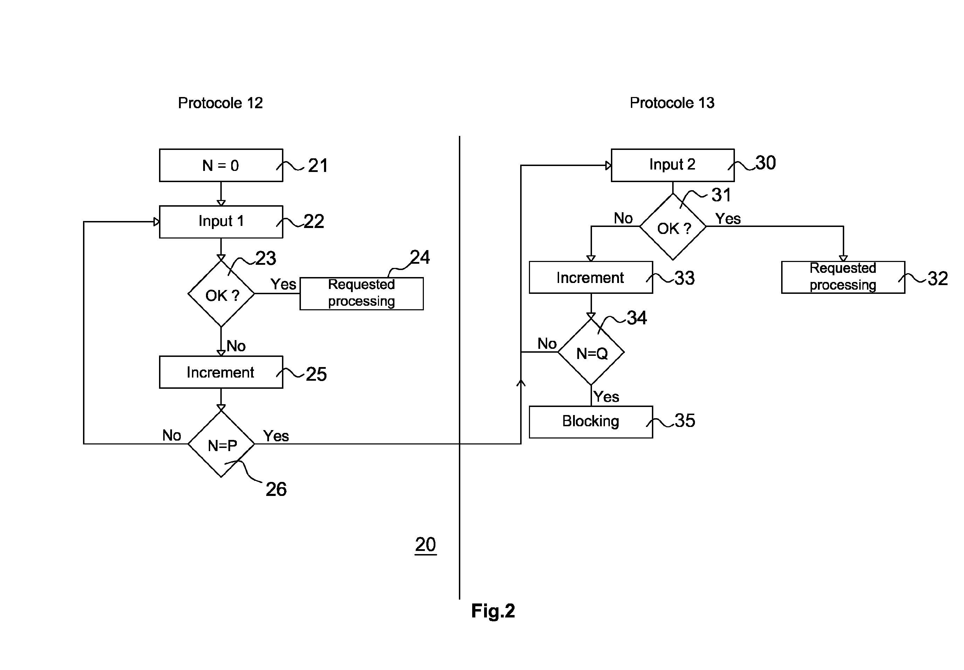

FIG. 2 shows a flow chart of a particular form of an embodiment of the process 20 according to the implemented invention for protecting the device against denial of service attacks.

First of all, the first communication protocol 12 is triggered by the device 10. This first communication protocol may be selected by default by the manufacturer of the device or manually by the user from a set of predefined communication protocols. In another embodiment, the device 10 selects the first protocol from the set of predefined communication protocols according to predefined criteria.

At step 21 the device 10 initializes the ratification counter 11, by assigning it a value N. the value N is an integer. In the embodiment illustrated in FIG.2 the value N is a null value.

Before executing a processing of some request or command, an authentication of the user of the device 10 is needed. To authenticate the device user, the user is involved by having to enter, at step 22, through an interface of the device 11, a first authorization data which is known to the sole device user and the device 10. The first authorization data is any identifier/indicia code suitably configured to allow an authenticated access. The first authorization data can be a Personal Identification Number (or PIN), a secret data, a password, a passcode, a biometric data, a digital certificate any identification code and/or the like.

Next, during step 23 of the test, the device 10 analyses whether the entered first authorization data is the expected data. If the answer is yes, i.e. when the entered data corresponds with the expected data stored within the device 10, then the device 10 authorizes, at step 24, to execute the requested processing. Next, the device 10 loops for the initialization of the counter's value N to zero.

If the answer is no, i.e. when the entered data does not correspond with the expected data stored within the device 10, then the device 10 increments, at step 25, the ratification counter value N with one unity. Then, the device 10 analyses, at step 26, whether the ratification counter value N has reached a predefined maximum value P, for example the value "two".

If the ratification counter value N is less than the maximum value P, then the steps 22 to 26 are repeated, i.e. the device 10 requests once again to the user to be authenticated by giving a further attempt for authorization data.

On the contrary, i.e. if the ratification counter value N is equal to the predefined maximum value P, then the device 10 is locked or in standby. The device 10 triggers the second communication protocol 13 which is different from the first protocol. This second communication protocol 13 may be selected by default by the manufacturer of the device, manually by the user from a set of predefined communication protocols, or by the device 10 from a set of predefined communication protocols according to predefined criteria, and

At step 30, the user is requested to enter through the interface of the device 10, a second authorization data which is known to the sole device user and the device 10. The second authorization data is preferably different from the first authorization data for more security. In the embodiment illustrated at FIG. 2 the second authorization data is considered as corresponding to the first authorization data.

Next, during step 31, the device 10 analyses whether the entered authorization data is the expected data. If the answer is yes, i.e. when the entered data corresponds to the expected data stored within the device 10 or a remote server, then the device 10 authorizes, at step 32, to execute the requested processing. Next, the device 10 loops for the initialisation of the counter's value N to zero.

If the answer is no, i.e. when the entered data does not correspond to the expected data stored within the device 10 or a remote server, then the device 10 increments, at step 33, the ratification counter value N with one unity. Then, the device 10 analyses, at step 34, whether the ratification counter value N has reached a predefined maximum value Q, for example the value "three".

If the ratification counter value N is less than the maximum value Q, then the steps 30 to 34 are repeated, i.e. the device 10 requests once again to the device user to be authenticated by giving a further attempt for authorization data.

On the contrary, i.e. if the ratification counter value N is equal to the predefined maximum value Q, then the device 10 forbids, at step 35, to go further by denying to execute the requested processing, while possibly sending to the user through the interface a message for informing him about a deny of an execution of the requested processing.

To re-activate the device 10, the user has to enter an unlock code. This code could be provided to the device user in a separate medium and if necessary user may request that code from a service provider.

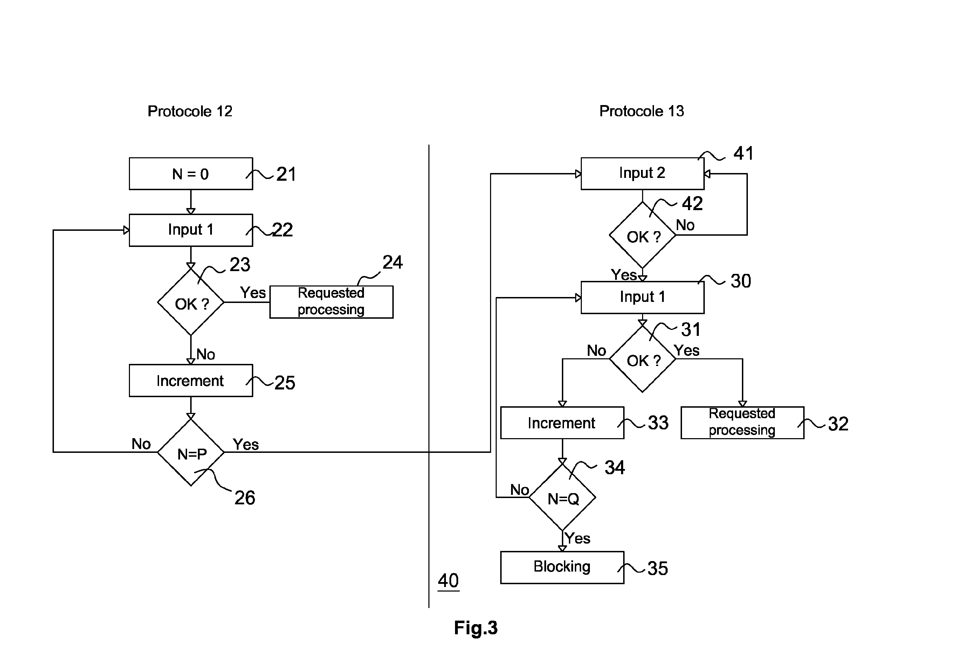

FIG. 3 shows a flow chart of a particular form of another embodiment of the process 40 according to the implemented invention for protecting the device against denial of service attacks.

The device 10 executes firstly the steps 21 to 26 described in FIG. 2. When the ratification counter value N is equal to the predefined maximum value P, then the device 10 triggers the second communication protocol 13 as previously described. Next at step 41, the user is requested to enter through the interface of the device 10, the second authorization data which is known to the sole device user and the device 10. In the embodiment of FIG. 3, the second authorization data is considered as different from the first authorization data. In an embodiment the second authorization code is a higher level authorization code like a PIN Unlock Code (PUC), also known as a PIN Unlock Key (PUK).

At step 42, the device 10 analyses whether the entered second authorization data is the expected data. If the answer is yes, i.e. when the entered data corresponds to the expected data stored within the device 10, then the device 10 executes the step 30 to step 35 described in FIG. 2.

If the answer is no, i.e. when the entered data does not correspond to the expected data stored within the device 10, then the steps 41 to 42 are repeated, i.e. the device 10 requests once again to the device user to be authenticated by giving a further attempt for the second authorization data.

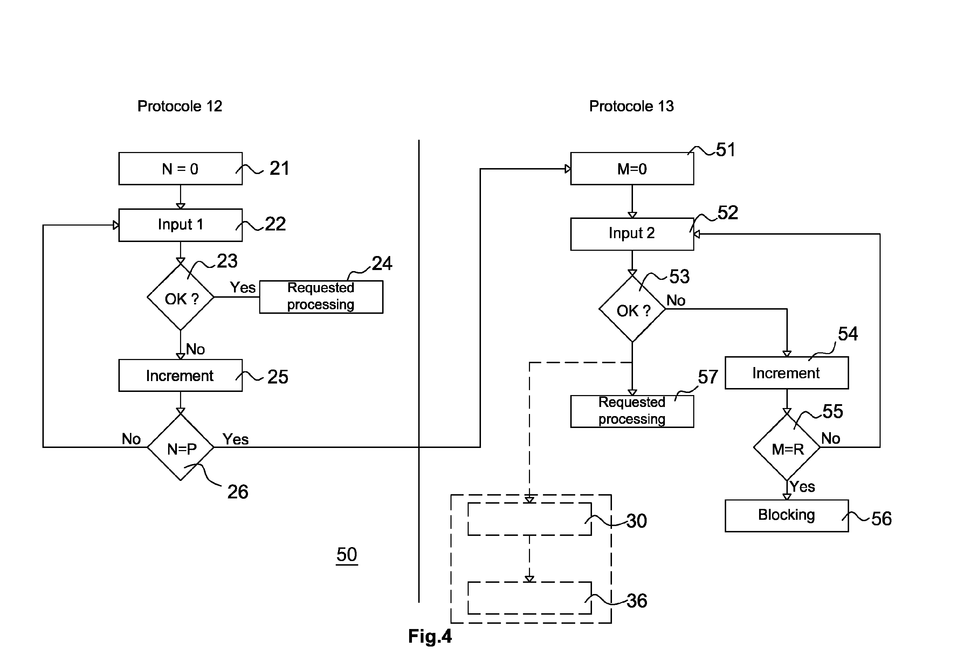

FIG. 4 shows a flow chart of a particular form of another embodiment of the process 50 according to the implemented invention for protecting the device against denial of service attacks.

The device 10 executes firstly the steps 21 to 26 described in FIG. 2. When the ratification counter value N is equal to the predefined maximum value P, then the device 10 triggers the second communication protocol 13 as previously described.

Next, at step 51 the device 10 initializes another ratification counter 11, by assigning it a value M. the value M is an integer. In the embodiment illustrated in FIG.4 the value M is a null value.

At step 52, the user is requested to enter through the interface of the device 10, the second authorization data which is known to the sole device user and the device 10. In the embodiment of FIG. 4, the second authorization data is considered as different from the first authorization data.

Next, during step 53 of the test, the device 10 analyses whether the entered second authorization data is the expected data. If the answer is no, then the device 10 increments, at step 54, the ratification counter value M with one unity. Then, the device 10 analyses, at step 55, whether the ratification counter value M has reached a predefined maximum value R, for example the value "three".

If the ratification counter value M is less than the maximum value R, then the steps 52 to 55 are repeated, i.e. the device 10 requests once again to the user to be authenticated by giving a further attempt for the second authorization data.

On the contrary, i.e. if the ratification counter value M is equal to the predefined maximum value R, then the device 10 is blocked. The device 10 forbids, at step 56, to go further by denying to execute the requested processing, while possibly sending to the user through the interface a message for informing him about a deny of an execution of the requested processing.

To re-activate the device 10, the user has to enter an unlock code. This code could be provided to the device user in a separate medium and if necessary user may request that code from a service provider.

If the answer is yes, then the device 10 authorizes, at step 57, to execute the requested processing. Next, the device 10 loops for the initialization of the counter's value N to zero.

In another embodiment, the device 10 replaces the step 57 by the steps 30 to 35 described in FIG. 2.

In another embodiment, the steps 30 to 35 are executed under the first communication protocol 12.

For instance, in the case of a combi card, after two failed authentications using contactless mode, the method according to the present invention requires an authentication in contact mode before the third authentication in contactless mode. In such case, a malicious attacker who would be close to the card with a contactless reader, could try two authentication values, but would not be able to perform an authentication in contact mode. In this case, the limit value of the ratification counter would not be reached, the card would not be blocked and the legitimate user will have to use the contact interface during next use to authenticate himself or herself.

Another possibility in the case of a combi card would be to select a contactless mode before reaching the limit value of the ratification counter in contact mode. In this case, the method according to the present invention makes more complex the possibility of a denial-of-service attack by requiring a malicious attacker to use several communication protocols.

Another possibility would consist in systematically modifying the communication protocol after a failed authentication. The choice of the communication protocol could be made in a random way.

An example of use of the method according to the present invention is during a contactless payment. In this example, the device 10 is a mobile phone. First of all, the payment reader of the merchant and the mobile phone establish a peering relationship within a NFC protocol based on a trust that each will adhere to the terms of an established peering agreement.

The user enters the first authorization data into the interface of the payment reader on request of said payment reader. The payment reader sends to the mobile phone through the NFC protocol the first authorization data. The SIM card of the mobile phone executes the steps 21 to 26 previously described. If the entered first authorization data corresponds with the expected data stored within the SIM card, then the mobile phone sends to the payment reader through the NFC protocol a positive response "yes". The payment reader finalizes the payment by accepting it.

If the entered first authorization data does not correspond with the expected data stored within the SIM card and that the ratification counter value is equal to the predefined maximum value P (here two), then the SIM card triggers the second communication protocol. In that example, the second communication protocol is a 3G network. The embodiments described in FIG. 2 to 4 can be implemented. The mobile phone exchanges with a remote server through the 3G network to verify whether the entered second authorization data by the user corresponds to a data stored in its memory.

If the entered second authorization data corresponds to the expected data stored within the remote server, then the remote server sends to the mobile phone through the 3G network a positive response "yes". Next, the mobile phone transmits the positive message to the payment reader through the NFC protocol. The payment reader finalizes the payment by accepting it.

If the entered second authorization data does not correspond to the expected data stored within the remote server and that the ratification counter value is equal to the predefined maximum value, then the remote server sends to the mobile phone through the 3G network a negative response "no". Next, the mobile phone transmits the negative response to the payment reader through the NFC protocol. The payment reader rejects the payment. The mobile phone is blocked for any payment by contactless unless if an unlock code is entered.

## Claims

1. Method of protecting a device against attacks, said device comprising a ratification counter initialized with an integer value N, wherein during an authentication step of a device user at a requested processing:
- when the current value N of the ratification counter is equal to a predefined maximum value P of a number of wrong first authorization data entered by the device user through a first communication protocols, then
- a second communication protocol is triggered through which a second authorization data is entered by the device user, said second communication protocol being different from said first communication protocol.

2. Method according to the previous claim, wherein when the current value N of the ratification counter is equal to a predefined maximum value Q of a number of wrong second authorization data entered by the device user through the second communication protocols, then the device is blocked otherwise the requested processing is executed.

3. Method according to claim 1, wherein when the entered second authorization data is the expected data then:
- the first authorization data is entered through the second communication protocol,
- when the current value N of the ratification counter is equal to a predefined maximum value Q of a number of wrong first authorization data entered by the device user through the second communication protocols, then the device is blocked otherwise the requested processing is executed.

4. Method according to claim 1, wherein a second ratification counter is initialized with an integer value M, when the second communication protocol is triggered and wherein when the current value M of the second ratification counter is equal to a predefined maximum value R of a number of wrong second authorization data entered by the device user through the second communication protocols, then the device is blocked.

5. Method according to claim 4, wherein when the entered second authorization data is the expected data then the requested processing is executed.

6. Method according to claim 4, wherein when the entered second authorization data is the expected data then:
- the first authorization data is entered through the second communication protocol,
- when the current value N of the ratification counter is equal to a predefined maximum value Q of a number of wrong first authorization data entered by the device user through the second communication protocols, then the device is blocked.

7. Method according to any previous claims, wherein the first and the second communication protocols are selected by default by the manufacturer of the device, manually by the user from a set of predefined communication protocols, or by the device 10 from a set of predefined communication protocols according to predefined criteria.

8. Method according to any previous claims, wherein the first and the second communication protocols belong to the following group of communication protocols: IS07816, ISO 14443, USB, SWP, NFC, Bluetooth, Zigbee, 2G, 3G or Wi-Fi protocols.

9. Method according to any previous claims, wherein the device is locked or in standby when the current value N of the ratification counter is equal to the predefined maximum value P.

10. Method according to any previous claims, wherein:
- the first authorization data is a Personal Identification Number (or PIN), a secret data, a password, a passcode, a biometric data, or a digital certificate,
- the second authorization data is the same that the first authorization data or different.

11. Method according to any previous claims, wherein the second authorization data is a higher level authorization code.

12. Method according to any previous claims, wherein said device is a contact and contactless combi card, a mobile phone, a smart card or a portable token.

13. Device (10) comprising a ratification counter initialized with an integer value N, said device comprising means for triggering a first communication protocol or a second communication protocol, said second communication protocol being different of said first protocol, said device comprising means to execute a method of protecting said device against attacks according to the claims 1 to 12 during an authentication step of a device user at a requested processing:
